# EUROPEAN PATENT SPECIFICATION

(11) **EP 2 316 020 B1**
(45) Date of publication and mention of the grant of the patent: **29.05.2013**
(21) Application number: 09785987.0
(22) Date of filing: 01.07.2009
(51) Int. Cl.: G01N 30/12, G01N 30/14

(54) **ON LINE SAMPLING DEVICE AND METHOD TO ANALYSE VOLATILE COMPOUNDS EMISSIONS**
ON-LINE-PROBENAHMEVORRICHTUNG UND VERFAHREN ZUR ANALYSE DER EMISSIONEN FLÜCHTIGER VERBINDUNGEN
DISPOSITIF D'ÉCHANTILLONNAGE EN LIGNE ET PROCÉDÉ D'ANALYSE DE COMPOSÉS VOLATILS

(30) Priority: 10.07.2008 IT MI20081259
(43) Date of publication of application: 04.05.2011
(73) Proprietor: Saipem S.p.A., 20097 San Donato Milanese (Milano) (IT)
(72) Inventor: ZAN, Leonardo, 61032 Fano (Pesaro e Urbino) (IT); PATRIGNANI, Gian Luca, 61032 Fano (IT); GUIDI, Massimo, 56011 Calci (Pisa) (IT); MANETTI, Piero, 50124 Firenze (IT)
(74) Representative: Maiwald Patentanwalts GmbH
(86) International application number: PCT/IB2009/006170
(87) International publication number: WO 2010/004404

(56) References cited:
- DE-A1- 10 125 415
- US-A1- 2005 082 473
- RICE A L ET AL: "High-precision continuous-flow measurement of delta13C and deltaD of atmospheric CH4." ANALYTICAL CHEMISTRY 1 SEP 2001, vol. 73, no. 17, 1 September 2001 (2001-09-01), pages 4104-4110, XP002526029 ISSN: 0003-2700
- CICCIOLI P ET AL: "Simple laboratory-made system for the determination of C2-C7 hydrocarbons relevant to photochemical smog pollution" JOURNAL OF CHROMATOGRAPHY, ELSEVIER SCIENCE PUBLISHERS B.V. AMSTERDAM, NL, vol. 777, no. 2, 15 August 1997 (1997-08-15), pages 267-274, XP004086884 ISSN: 0021-9673
- BRENNA J T ET AL: "High-precision continuous-flow isotope ratio mass spectrometry" MASS SPECTROMETRY REVIEWS, JOHN WILEY AND SONS, NEW YORK, NY, US, vol. 16, no. 5, 1 September 1997 (1997-09-01), pages 227-258, XP002515242 ISSN: 0277-7037

## Description

The present invention relates to a Sampling Module (1) used to sample volatile compounds, either with air or without air, said Sampling Module (1) connected to a group of instruments comprising a Gas Chromatograph (2), an oven (3) or a Pyrolysis device (6), an interface (4) and a High Resolution Mass Spectrometer (5) so that all instruments are on line. Moreover the present invention relates to a method to analyse volatile compounds, either with air or without air, sampled by means of said Sampling Module (1).

Said method is used to analyse mixtures of methane, hydrocarbons Cₙ with n = 2 - 6 and benzene - toluene - xylene BTX, both with air and without air, and their single compounds.

Moreover the invention relates to a process which remotely controls and synchronizes, by means of software, a device which comprises said Sampling Module (1), on line with the group of instruments which includes a Gas Chromatograph (2), an oven (3) or a Pyrolysis device (6), an interface (4) and a High Resolution Mass Spectrometer (5).

It is known that methane is one of the higher concentration greenhouse gases in the troposphere and that its concentration is growing constantly. Methane derives both from natural emissions and from anthropological activities (exploration, transport, combustion, fermentation etc.). Methane also dissolves in water and it is organically originated by thermogenic or biogenic processes. The formation of thermogenic methane is usually associated to oil reservoirs, to natural gas fields, but we can also have water reservoirs contaminations because of natural gas distribution and stocking. The presence of biogenic methane is documented in anaerobic environments, including lignite deposits, lacustrine sediments, glacial and Aeolian rocks and peat - bogs. In order to identify air pollutants like methane, several analysis techniques were conceived, whose target is to establish their content and the thermogenic or biogenic origin: "finger printing" techniques.

Till now these techniques were employed to analyse methane CH₄ and carbon dioxide CO₂ which are present in air or in vehicles exhausted gases in urban areas. Each sample gives the measure of a single gas. These techniques don't allow the simultaneous measure of any other eventually present hydrocarbon (for example Cₙ with n = 2 - 6) and of the eventual compounds BTX benzene - toluene - xylene.

"Finger printing" techniques combine different analytical techniques which include the separation of sampled gas by means of Gas Chromatography technique, and the determination of isotopic composition by means of High Resolution Mass Spectrometry.

A general scheme applied to this aim comprises the following elements:
· a device to concentrate a sample which includes a liquid nitrogen criofocusing device,
· a Gas Chromatograph GC,
· an Oven or a Pyrolysis device
· a High Resolution Mass Spectrometer IRMS,
· an interface GC - IRMS.

All the instruments are appropriately connected and the analysis is executed on line. Specific software remotely controls and synchronizes all the instruments. The sample is injected into the Gas Cromatograph where gases are separated. Subsequently gases are oxidized to form carbon dioxide CO₂ and water H₂O in an oven. Otherwise gases are reduced to form hydrogen H₂. Combustion or pyrolisis products pass through a humidity trap and an open split regulates the correct and sufficient quantity of gas to be introduced into the Mass Spectrometer. The High Resolution Gas Spectrometer measures the isotopic ratio δ¹³C/δ¹²C (carbon 13/carbon 12) o D/H (deuterium/hydrogen). Very small variations of the isotopic ratio [‰] can be used to trace the origin and the type of examined gas.

Lowe D.C. Brenninkmejer Cam, Tyler S.C.Dlugkencky E.J., Journal of Geophysical Research - Atmospheres vol. 96, issue D8 pages 15455-15467 published August 20th 1991, defined a procedure to determine the isotopic ratio δ¹³C/δ¹²C. The method is based on a group of air samples which come from Baring Head in New Zeland and between this area and Antarctica. A cryogenic process removes the condensates, then methane is oxidized to give carbon dioxide CO₂. In the last step the Mass Spectrometer analyses CO₂ to determine the isotopic ratio δ¹³C/δ¹²C.

J. Moriizumi, K. Nagamine, T. Iida, Y. Ikebe and T. Nakamura, Chikyukagaku Geochemistry vol. 29 pages 99-111 published in 1995 determined the atmospheric methane isotopic composition (δ¹⁴C, δ¹³C and δ¹²C) collecting air samples from urban areas of Nagoya in Japan. Researchers analysed daily and nightly variations and the human influence on these variations.

Nakagawa F., Tsunogai U., Komatsu D.D., Yamada K., Yoshida N., Moriizumi J., Nagamine K., Lida T., Ikebe Y. Organic Geochemistry vol. 36, Issue 5 pages 727-738 published in 2005 determined the hydrogen and carbon isotopes (D and δ¹³C) from methane CH₄ contained in vehicles exhausted emissions in the urban areas of Nagoya in Japan. Samples of exhausted emissions are sucked into a vacuum line which contains several cryogenic traps, like a liquid nitrogen trap, an active carbon trap and a molecular sieve. Gas is desorbed at 260°C and again adsorbed on a molecular sieve trap at liquid nitrogen temperature. Subsequently gas is heated to room temperature and separated by Gas cromatography, oxidized into a tube by CuO at T higher than or equal to 830°C to form CO₂ and H₂O and with Colemen Method (1982) it is converted into H₂ to determine its isotopic ratio (D/H).

Yamada K., Ozaki Y., Nakagawa F., Tanaka M., Yoshida N. Atmospheric Environment vol. 37, Issue 14 pages 1975-1982 published in May 2003 used an on line method to measure the hydrogen isotopic ratio D/H contained in atmospheric methane. The system is composed by:
· Gas Chromatograph GC
· High Temperature Converter C
· High Resolution Mass Spectrometer IRMS

Air samples pass through a group of active carbon, molecular sieves and liquid nitrogen traps. Then gas is heated to 25°C to free CH₄ which is chilled once again.

A six - way valve controls the liquid nitrogen trap and the chiller. Finally gas enters the line GC/C/IRMS.

Sugimoto A. Geochemical Journal vol. 30, Issue 3 pages 195-200 published in 1996 developed an on line system composed by:
· 2 Gas Chromatographs GC
· Oven C
· High Resolution Mass Spectrometer IRMS

A low concentration methane sample is separated from nitrogen and oxygen in the first packed column Gas Chromatograph. Separated gas is introduced into the line GC/GC/C/IRMS to measure the isotopic composition. It is known that natural gas is produced by the metabolism of micro-organisms present in the superficial layers of the soil. Methane present in natural gas has a characteristic "light" isotopic composition and it is mixed with low quantities of higher hydrocarbon gases. A gas formed in the marine environment is composed by CH₄ (99.9 vol %, normalised), by negligible quantities of ethane C₂H₆ and hydrocarbon gases Cₙ₊₁, with n greater then 2 (because lower then 0.1 vol.%). In general said gas shows values δ¹³C < -60 ‰ and it is typically named "impoverished". It is known that thermogenic CH₄ is originated by kerogene and /or oil as a result of the thermal increase during the burial of sedimentary layers wherein it is trapped. Thermogenic hydrocarbon gases show typically heavy carbon isotopic compositions (-20 < δ¹³C < -60 ‰) - higher than those of biogenic gases - and larger quantities of higher hydrocarbons (up to 50%).

US 2005/082473 A1 discloses a process to analyze hydrocarbon gases including methane, coming from head wells or degassed from mud streams. Gas is scrubbed from humidity and H₂S before sending it to a stream splitter from which two currents are generated. A first current follows a different channel; the second current follows a second channel wherein a sampling module and an injection module allow storing multiple aliquots of the gas on a Valco valve. Gas aliquots are sequentially infected into an analysis system GC/C/IRMS which is easy transportable. The invention described by said document includes proprietary software suitable to light hydrocarbon analysis for both channels; said software is optimized for Natural Gas.

Rice et al., Analytical Chemistry SEP 2001, Vol. 73, No. 17, September 01, 2001, pages 4104-4110, "High - precision continuous flow measurement of delta 13C and deltaD of atmospheric CH4" discloses a cryofocusing loop which is used to concentrate a gas sample before sending it to a GC/C/IRMS system. Said cryofocusing loop includes a Precolumn and a manual extraction PoraPlot capillary column which are dipped in a cryogenic bath which uses liquid nitrogen as cooling fluid in the cryogenic bath.

Up to now all techniques have these common features:
· low temperatures reached by means of liquid nitrogen N₂
· adsorbent means are HayesepD and molecular seaves in packed columns.

Up to now all methods have been employed to determine CH₄ in air. Up to now no techniques have been employed on hydrocarbons Cₙ with n = 2 - 6 and on BTX benzene - toluene - xylene.

Some concentration techniques for some organic volatile components by means of adsorbent materials like Tenax TA, cold Carbosieve SIII/Molsieve and active carbon are well known.

An object of the present invention is to provide an integrated device to sample and to analyse compounds like air, natural gas, hydrocarbons Cₙ with n = 2 - 6, benzene - toluene - xylene BTX, both as single compounds and in mixtures, said device allows one process from one sample and for all components that are in mixture.

A further object is to create an on line device which allows the in situ isotopic monitoring and to determine the isotopic ratios δ¹³C/δ¹²C and D/H, in order to trace out the origin of the analysed substances.

In one embodiment, Sampling Module (1) is characterised in that it comprises:
■ a pump (7) to maintain a constant flow
■ a cold trap (8)
■ a flow regulator (9)
■ a concentration device (14) of the gas sample comprising:
   - a six-way pneumatically actuated valve (10) which allows both to send gas to the cryogenic device (11), and to inject the previously chilled and subsequently heated gas to Gas Chromatograph (2)
   - a cryogenic device (11) to pull down the liquid fractions of water and heavy hydrocarbons and to concentrate the gas sample
   - a cold trap (12) before the analytical system
   - a heater (13)

In another embodiment, the present invention relates to a device to analyse methane, hydrocarbon compounds Cₙ with n = 2 - 6 and benzene - toluene - xylene BTX, and their single compounds, comprising:
- a Gas Chromatograph (2)
- a Oven (3) or a Pyrolysis Device (6)
- an interface (4)
- a High resolution Mass Spectrometer (5)
- the Sampling Module (1), as described above.

In another embodiment, the present invention relates to a method to analyse a gas flow in air or without air, which comprises methane, substances selected form the group consisting of hydrocarbons Cₙ with n = 2 - 6, and benzene - toluene - xylene BTX, and their single compounds, as set forth in the appended claims. The method comprises the following steps:
- preliminarly analysing the sample to optimise the flow rate to a sampling device,
- sampling a gas with a sampling device,
- injecting a gas into a Gas Chromatograph (2),
- separating the gas by means of a Gas Chromatograph (2)
- oxidising a gas in a oven (3) to form carbon dioxide CO₂ and water H₂O, or burning a gas into a pyrolysis device (6) to form hydrogen H2,
- filtering humidity by means of traps and regulating the gas quantity in the interface (4),
- introducing a gas in a High Resolution Mass Spectrometer (5) and measuring the isotopic ratios of sampled gas,
- remotely controlling and synchronizing every step of the process by means of a software.

Claimed device has the main advantage to allow the remotely isotopic monitoring through the on line analysis of methane, hydrocarbon compounds Cₙ with n = 2 - 6, and benzene - toluene - xylene BTX, and their single compounds, in order to verify the origin of the substances. Furthermore the invention allows in situ measures, for example from gas wells, as all the items are connected thus forming a portable device; and with a higher frequency than in a laboratory. The isotopic monitoring is also applied to hydrocarbons Cₙ with n = 2 - 6, and benzene - toluene - xylene BTX, and their single compounds.

Further advantages will be clearer from the following description and from the attached drawings which are provided being merely exemplary in nature.
F ig. 1 shows a general scheme of the measuring system;
F ig. 2 shows a scheme of the Sampling Module (1);
F ig. 3 shows a Stirling Cryocooler (11) comprising a piston compressor (15), a pipe where the working fluid flows (17), an element with a flange (18) on ones side and a cylinder (16) on the other side known as the cold element;
F ig. 4 shows a scheme to connect the Gas Chromatograph (2), Sampling Module (1), oven (3) and High Resolution mass Spectrometer (5).

### Detailed description.

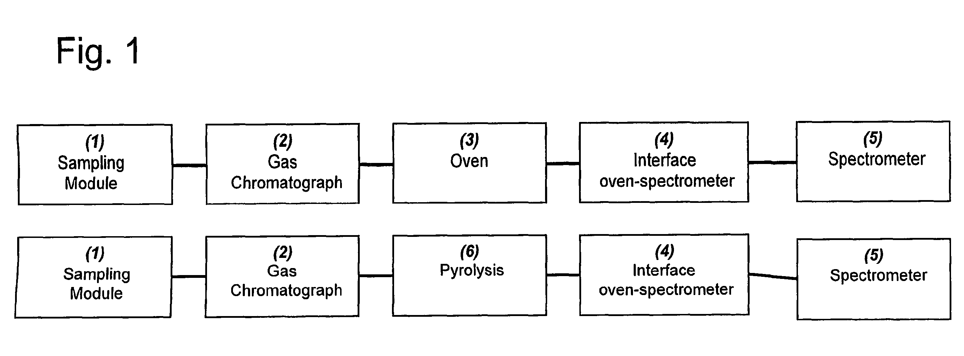

With referring to Fig. 1 the device object of the invention comprises the following on line connected elements:
· a Sampling Device (1)
· a Gas Chromatograph (2)
· an Oven (3) or a Pyrolysis Device (6)
· an interface (4)
· a High resolution Mass Spectrometer (5)

All the instruments are connected on line and controlled and synchronized through software connected to a remote data transmission device. The oven (3) and the pyrolysis device (6) are absolutely conventional and commercially available models. The device allows the analysis of methane, hydrocarbon compounds Cₙ with n = 2 - 6, and benzene - toluene - xylene BTX, and their single compounds. The analysis is executed on one single sample for all the components of the mixtures, thus saving time and with a higher frequency then in a laboratory. The device can be transported in situ and the analysis can be carried out *in situ,* as for example on gas wells.

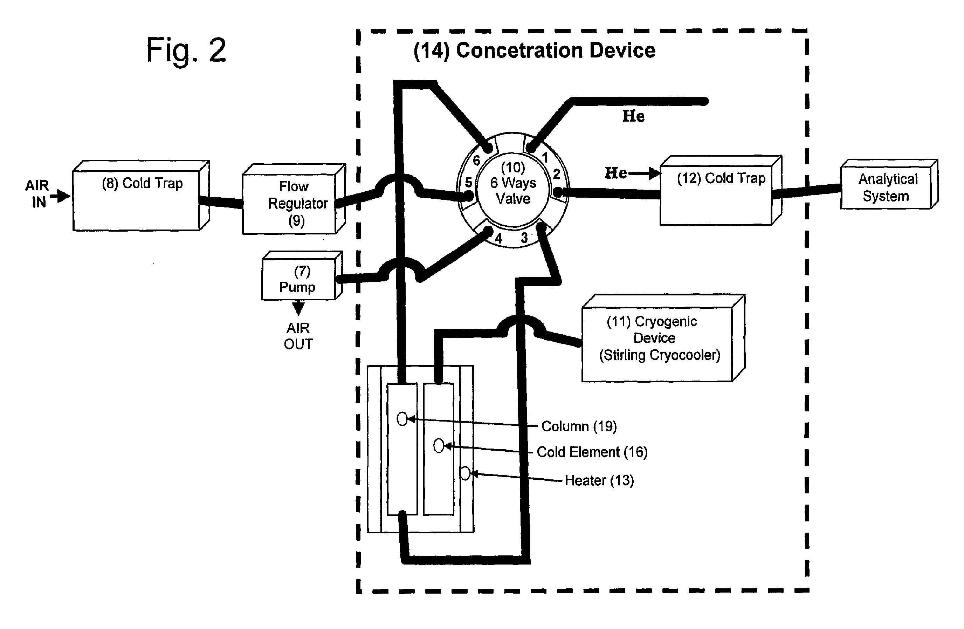

An essential aspect of the invention is the structure of the Sampling Module (1) which comprises, with referring to Fig. 2, the following elements:
· a pump (7) to maintain a constant flow
· a cold trap (8)
· a flow regulator (9)
· a concentration device (14) of the gas sample comprising:
   - a six-way pneumatically actuated valve (10) which allows both to send gas to the cryogenic device (11), and subsequently to inject the previously chilled and subsequently heated gas into a Gas Chromatograph (2)
   - a cryogenic device (11) to reduce the liquid fractions of water and heavy hydrocarbons and to concentrate the gas sample
   - a cold trap (12) before the analytical system
   - a heater (13)

Commonly the cryogenic device (11) works with liquid nitrogen. Nevertheless this doesn't allow the instrument to be transportable and it requires frequent interventions of an operator in order to refill the liquid nitrogen during the sample concentration step.

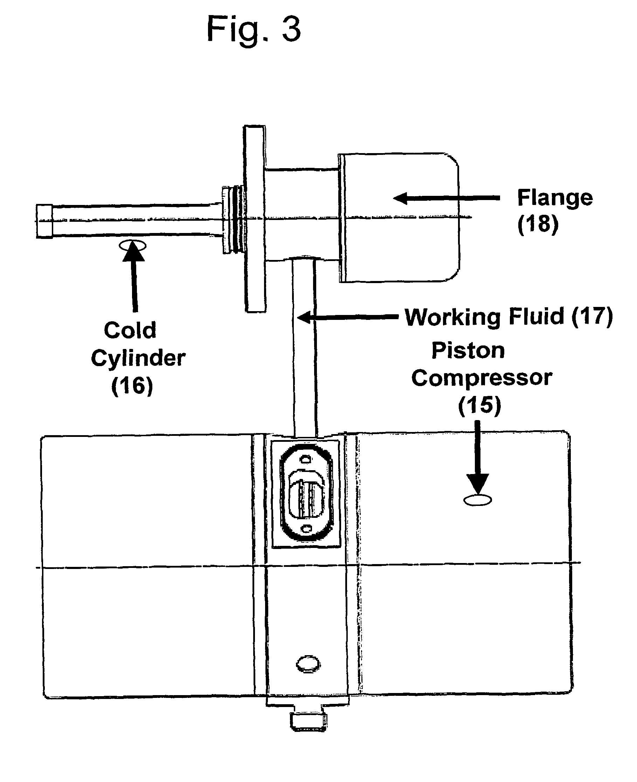

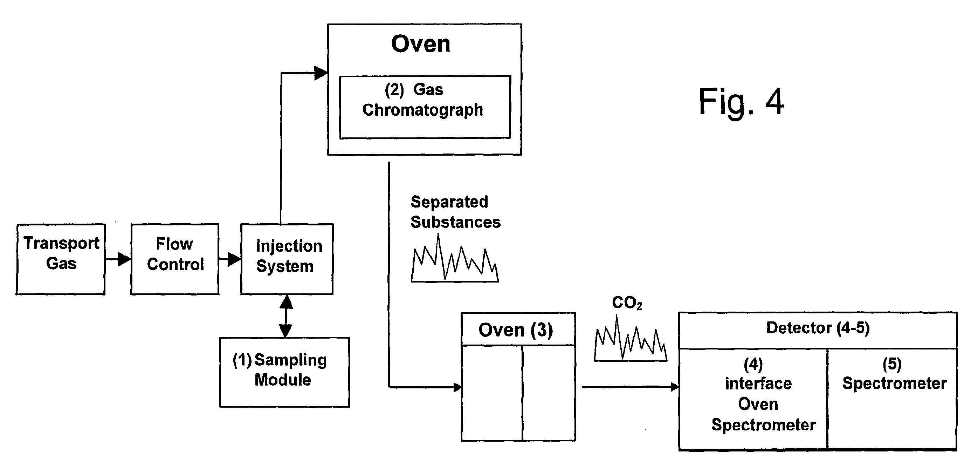

This system requires the use of the instruments inside a laboratory. A preferred embodiment of the present invention uses a Stirling Cryocooler as a cryogenic device (11). With referring to Fig.3, said device comprises a piston compressor (15), a pipe where the working fluid flows (17), an element with a flange (18) on ones side and a cylinder (16) on the other side known as the cold element. The Stirling Cryocooler cools the cylinder (16) to the desired temperature through the Stirling cycle. The concentration device (14) comprises a metal block with a column inside filled with a suitable absorbent material and a pocket wherein the cold element of the cryogenic device (Stirling Cryocooler) (11) is dipped. The block is placed inside a heater (13) composed by a heating resistance. During sampling gas is injected in a column and the Stirling Cryocooler is on. During the concentration step the cooling temperature is -170°C. The Stirling Cryocooler temperature is programmable and this allows a first separation step of the condensable fractions especially during gas well measures. The heater is preferably a conventional and commercially available oven, which brings the maximum temperature to 250°C in a few minutes (2'). During this step the compounds become gases. A Helium flow He is injected into the column after the heating phase to convey gas into the Gas Chromatograph (2). The system which reduces condensates could be for example a GORETEX filter. Samples analysis is carried out according the following steps:
· preliminarly analysing the sample to optimise the feed flow rate to a sampling device, sampling a gas with a sampling device,
· injecting a gas into a Gas Chromatograph (2),
· separating the gas by means of a Gas Chromatograph (2)
· oxidising a gas in an oven (3) to form carbon dioxide CO₂ and water H₂O, or burning a gas into a pyrolysis device (6) to form hydrogen H2,
· filtering humidity by means of traps and regulating the gas quantity in the interface (4),
· introducing a gas in a High Resolution Mass Spectrometer (5) and measuring the isotopic ratios of a sampled gas,
· remotely controlling and synchronising all the steps of the process by means of software.

First of all a preliminary analysis of the sample is made in order to verify and optimise the feed flow rate to the Sampling Module (1) as it is described above. In fact, it is essential to inject the right amount of the substance so that instruments make a correct analysis. In general the isotopic ratio doesn't depend on the injected quantity of sample; even so what we said is not correct when the amounts are too small or too large. Software is programmed to compare the instruments response due to an internal standard and the response due to the sample, and consequently to correct the flow. If the injected quantities are strongly reduced because of said optimization, the sample must be concentrated by the Stirling Cryocooler (11), as the instruments wouldn't detect the compounds present in traces, like for example n - hexane.

Once the right quantity of sample is established, gas is injected into the Gas Chromatograph (2) to separate the components. Separated gases can be:
· burned in an oven (3) (oxidation at high temperature T and following reduction) to form CO₂ and water
· the pyrolysis (6) at high temperature T (1350°C and in reducing environment) to form H₂.

In the first case the Mass Spectrometer (5) determines the carbon isotopic ratio δ¹³C/δ¹²C (carbon 13/carbon 12), in the second case the instrument determines the hydrogen isotopic ratio D/H (deuterium/hydrogen). Before entering the Mass Spectrometer (5) gas flows through a interface which includes a humidity trap (12) and a system of capillary vessels open split to regulate the quantity of gases (4). All the instruments are appropriately connected to software and to a remote data transmission station. The software controls and synchronises all the phases and it optimises the flow rate to the Sampling Module (1).

## Claims

1. A device to analyse methane, hydrocarbon compounds Cₙ with n = 2 - 6 and benzene - toluene - xylene BTX, and their single compounds, comprising the instruments:
· a Gas Chromatograph (2)
· a Oven (3) or a Pyrolysis Device (6)
· an interface (4)
· a High Resolution Mass Spectrometer (5)
· a Sampling Module (1) which includes:
o a pump (7) to maintain a constant flow
o a cold trap (8)
o a flow regulator (9)
o a concentration device (14) of the gas sample comprising
■ a Stirling Cryocooler (11) to reduce the liquid fractions of water and heavy hydrocarbons and to concentrate the gas sample
■ a six- way pneumatically actuated valve (10) which allows both to send gas to the Stirling cryocooler (11), and to inject the previously chilled and subsequently heated gas to Gas Chromatograph (2)
■ cold trap (12) before the analytical system
■ a heater (13)
said device **characterized in that** all said instruments are connected on line and to a software, said software being connected to a remote data transmission station so as it controls and synchronises all the instruments and it optimises the flow rate to the Sampling Module (1).

2. A process to remotely control and synchronise the device according to claim 1 by means of a software, said process comprising:
· comparing the instruments response due to an internal standard and the response due to the sample, and consequently
· optimising the feed flow rate to the Sampling Module (1),
· controlling and synchronising said device.

3. A method to analyse a gas flow, either with air or without air, which comprises methane, substances selected from the group consisting of hydrocarbons Cₙ with n = 2 - 6, and benzene - toluene - xylene BTX, and their single compounds, said method comprising the following steps:
· preliminarily analysing the sample to optimise the feed flow rate of said gas to a Sampling Module (1) according to claims 1 and 2,
· cooling said optimised feed gas by means of a Stirling Cryocooler (11) comprised in said Sampling Module (1) in order to concentrate said feed flow rate, in case that the feed gas quantities are strongly reduced because of said optimisation,
· sampling the optimised feed gas by means of said Sampling Module (1) wherein said Stirling Cryocooler (11) cools said optimised feed gas, in order to reduce the liquid fraction of water and heavy hydrocarbons and to concentrate said gas,
· heating the concentrated gas by means of a heater,
· injecting said concentrated and subsequently heated gas into a Gas Chromatograph (2), and
· separating said concentrated and subsequently heated gas by the Gas Chromatograph (2),
· oxidising the separated gas in a oven (3) to form the mixture carbon dioxide CO₂ and water H₂O, or burning the separated gas into a pyrolysis device (6) to form hydrogen H₂,
· filtering humidity by means of traps and regulating the gas quantity in the interface (4),
· introducing the mixture carbon dioxide CO₂ and water H₂O, or H₂ in a High Resolution Mass Spectrometer (5) and measuring the isotopic ratios of the introduced gas,
· connecting on line the instruments comprising said Sampling Module (1), said Gas Chromatograph (2), said oven (3) or pyrolysis device (6), said Interface (4) and said High Resolution Mass Spectrometer (5) and connecting said instruments to a software which is connected to a remote data transmission device so as to remotely control and synchronise all their operations.

## Patentansprüche

1. Vorrichtung zum Analysieren von Methan, Kohlenwasserstoff-Verbindungen Cₙ mit n = 2 - 6 und Benzol - Toluol - Xylol BTX, und deren einzelnen Verbindungen, umfassend die Instrumente:
- einen Gas-Chromatographen (2)
- einen Ofen (3) oder eine Pyrolyse-Vorrichtung (6)
- ein Interface (4)
- ein Hoch-Auflösungs-Massen-Spektrometer (5)
- ein Proben-Nahme-Modul (1), das einschließt:
o eine Pumpe (7), um einen konstanten Fluss zu halten
o eine Kälte-Falle (8)
o einen Durchfluss-Regler (9)
o eine Konzentrierungs-Vorrichtung (14) der Gas-Probe, umfassend
■ eine Stirling-Kältemaschine (11) zum Vermindern der flüssigen Fraktionen von Wasser und schweren Kohlenwasserstoffen und zum Aufkonzentrieren der Gas-Probe
■ ein pneumatisch betätigtes Sechs-WegeVentil (10), das erlaubt, sowohl Gas zu der Stirling-Kältemaschine (11) zu senden, als auch das vorher gekühlte und anschließend erhitzte Gas in den Gas-Chromatographen (2) zu injizieren,
■ Kälte-Falle (12) vor dem analytischen System
■ eine Heiz-Vorrichtung (13) wobei die Vorrichtung **dadurch gekennzeichnet ist, dass** alle Instrumente On-Line und mit einer Software verbunden sind, wobei die Software mit einer Fern-Daten-Übertragungs-Station verbunden ist, so dass sie alle Instrumente steuert und synchronisiert und die Fließgeschwindigkeit zu dem Proben-Nahme-Modul (1) optimiert.

2. Verfahren zur Fern-Steuerung und zum Synchronisieren der Vorrichtung nach Anspruch 1 mit Hilfe einer Software, wobei das Verfahren umfasst:
- Vergleichen der Instrumenten-Ausgabe auf Grund eines inneren Standards und der Ausgabe auf Grund der Probe, und folglich
- Optimieren der Zuführungs-Fließgeschwindigkeit bzw. Zuführungs-Strom-Rate mit dem Proben-Nahme-Modul (1),
- Steuern und Synchronisieren der Vorrichtung.

3. Verfahren zum Analysieren eines Gas-Flusses, entweder mit Luft oder ohne Luft, der Methan, Substanzen, ausgewählt aus der Gruppe, bestehend aus Kohlenwasserstoffen Cₙ mit n = 2 - 6, und Benzol - Toluol - Xylol BTX, und deren einzelne Verbindungen, umfasst, wobei das Verfahren die nachstehenden Schritte umfasst:
- vorheriges Analysieren der Probe zum Optimieren der Zuführungs-Fließgeschwindigkeit bzw. Zuführungs-Strom-Rate des Gases zu einem Proben-Nahme-Modul (1) nach Ansprüchen 1 und 2,
- Kühlen des optimierten Zuführungs-Gases mit Hilfe einer Stirling-Kältemaschine (11), die in dem Proben-Nahme-Modul (1) enthalten ist, zum Konzentrieren der Zuführungs-Fließgeschwindigkeit bzw. Zuführungs-Strom-Rate, in dem Fall, dass die zugeführten Gas-Mengen auf Grund der Optimierung stark vermindert sind,
- Proben-Nahme des optimierten zugeführten Gases mit Hilfe des Proben-Nahme-Moduls (1), wobei die Stirling-Kältemaschine (11) das optimierte zugeführte Gas kühlt, um die flüssige Fraktion von Wasser und schweren Kohlenwasserstoffen zu vermindern und das Gas zu konzentrieren,
- Erhitzen des konzentrierten Gases mit Hilfe einer Heiz-Vorrichtung,
- Einspritzen des konzentrierten und anschließend erhitzten Gases in einen Gas-Chromatographen (2), und
- Auftrennen des konzentrierten und anschließend erhitzten Gases durch den Gas-Chromatographen (2),
- Oxidieren des aufgetrennten Gases in einem Ofen (3), um das Gemisch von Kohlendioxid CO₂ und Wasser H₂O zu bilden, oder Hocherhitzen des aufgetrennten Gases in einer Pyrolyse-Vorrichtung (6), um Wasserstoff H₂ zu bilden,
- Filtern der Feuchtigkeit mit Hilfe von Fallen und Regulieren der Gas-Menge in dem Interface (4),
- Einführen des Gemisches von Kohlendioxid CO₂ und Wasser H₂O, oder H₂ in ein Hoch-Auflösungs-Massen-Spektrometer (5) und Messen der Isotopen-Verhältnisse des eingeführten Gases,
- On-Line-Verbinden der Instrumente, umfassend das Proben-Nahme-Modul (1), den Gas-Chromatographen (2), den Ofen (3) oder die Pyrolyse-Vorrichtung (6), das Interface (4) und das Hoch-Auflösungs-Massen-Spektrometer (5) und Verbinden der Instrumente mit einer Software, die mit einer Fern-Daten-Übertragungs-Vorrichtung verbunden ist, um alle ihre Vorgänge fern zu steuern und zu synchronisieren.

## Revendications

1. Dispositif pour analyser le méthane, les composés hydrocarbonés Cₙ où n = 2-6 et le benzène-toluène-xylène BTX, ainsi que leurs composés isolés, comprenant les instruments suivants :
● un chromatographe gazeux (2)
● un four (3) ou un dispositif de pyrolyse (6)
● une interface (4)
● un spectromètre de masse haute définition (5)
● un module d'échantillonnage (1) qui comprend :
o une pompe (8) pour maintenir un écoulement constant
o un piège à froid (8)
o un régulateur d'écoulement (9)
o un dispositif de concentration (14) de l'échantillon de gaz comprenant
■ un cryo-refroidisseur Stirling (11) pour réduire les fractions liquides d'eau et d'hydrocarbures lourds et pour concentrer l'échantillon de gaz
■ une vanne à commande pneumatique à six voies (10) qui permet à la fois d'envoyer du gaz au cryo-refroidisseur Stirling (11) et d'injecter le gaz d'abord gelé et ensuite chauffé dans le chromatographe gazeux (2)
■ un piège à froid (12) avant le système analytique
■ un réchauffeur (13)
ledit dispositif étant **caractérisé en ce que** tous lesdits instruments sont connectés en ligne et à un logiciel, ledit logiciel étant connecté à un poste de transmission de données à distance de façon à contrôler et synchroniser tous les instruments et à optimiser le débit vers le module d'échantillonnage (1).

2. Procédé pour contrôler et synchroniser à distance le dispositif selon la revendication 1 au moyen d'un logiciel, ledit procédé comprenant :
● la comparaison de la réponse des instruments à un étalon interne et de la réponse à l'échantillon, et en conséquence,
● l'optimisation du débit d'alimentation vers le module d'échantillonnage (1),
● le contrôle et la synchronisation dudit dispositif.

3. Procédé pour analyser un courant de gaz, soit avec de l'air soit sans air, qui comprend du méthane, des substances choisies dans l'ensemble constitué par les hydrocarbures en Cₙ où n = 2-6 et du benzène-toluène-xylène BTX, ainsi que leurs composés isolés, ledit procédé comprenant les étapes suivantes :
● analyse préliminaire de l'échantillon pour optimiser le débit d'introduction dudit gaz dans un module d'échantillonnage (1) selon les revendications 1 et 2,
● refroidissement dudit gaz d'alimentation optimisé au moyen d'un cryo-refroidisseur Stirling (11) compris dans ledit module d'échantillonnage (1) afin de concentrer ledit débit d'introduction, dans le cas où les quantités de gaz d'alimentation sont fortement réduites en raison de ladite optimisation,
● échantillonnage du gaz d'alimentation optimisé au moyen dudit module d'échantillonnage (1) dans lequel ledit cryo-refroidisseur Stirling (11) refroidit ledit gaz d'alimentation optimisé, afin de réduire la fraction liquide d'eau et d'hydrocarbures lourds et de concentrer ledit gaz,
● chauffage du gaz concentré au moyen d'un réchauffeur,
● injection dudit gaz concentré et ensuite chauffé dans un chromatographe gazeux (2), et
● séparation dudit gaz concentré et ensuite chauffé par le chromatographe gazeux (2),
● oxydation du gaz séparé dans un four (3) pour former le mélange de dioxyde de carbone CO₂ et d'eau H₂O, ou brûlage du gaz séparé dans un dispositif de pyrolyse (6) pour former de l'hydrogène H₂,
● filtration de l'humidité au moyen de pièges et régulation de la quantité de gaz dans l'interface (4),
● introduction du mélange de dioxyde de carbone CO₂ et d'eau H₂O, ou du H₂, dans un spectromètre de masse haute définition (5) et mesure des proportions d'isotopes dans le gaz introduit,
● connexion en ligne des instruments comprenant ledit module d'échantillonnage (1), ledit chromatographe gazeux (2), ledit four (3) ou dispositif de pyrolyse (6), ladite interface (4) et ledit spectromètre de masse haute définition (5), et connexion desdits instruments à un logiciel qui est connecté à un dispositif de transmission de données à distance de façon à contrôler et synchroniser à distance toutes leurs opérations.
